# EUROPÄISCHE PATENTSCHRIFT

(11) **EP 3 649 376 B1**
(45) Veröffentlichungstag und Bekanntmachung des Hinweises auf die Patenterteilung: **01.09.2021**
(21) Anmeldenummer: 18742912.1
(22) Anmeldetag: 06.07.2018
(51) Int. Cl.: F16H 25/24, F16H 25/20

(54) **ANTRIEBSVORRICHTUNG FÜR EINE FAHRZEUGKLAPPE**
DRIVE DEVICE FOR A VEHICLE FLAP
DISPOSITIF D'ENTRAÎNEMENT POUR UN OUVRANT DE VÉHICULE

(30) Priorität: 06.07.2017 DE 102017115183
(43) Veröffentlichungstag der Anmeldung: 13.05.2020
(73) Patentinhaber: Edscha Engineering GmbH, 42855 Remscheid (DE)
(72) Erfinder: WIRTH, Andre, 42855 Remscheid (DE); BALS, Jochen, 44319 Dortmund (DE)
(74) Vertreter: Sparing, Rolf Klaus
(86) Internationale Anmeldenummer: PCT/DE2018/100624
(87) Internationale Veröffentlichungsnummer: WO 2019/007467

(56) Entgegenhaltungen:
- EP-A1- 2 432 101
- DE-A1-102014 220 414
- DE-A1-102015 221 067
- DE-A1-102016 207 415

## Beschreibung

Die Erfindung betrifft eine Antriebsvorrichtung für eine schwenkbare Fahrzeugklappe nach dem Oberbegriff des Anspruchs 1.

Aus der Praxis sind Antriebsvorrichtungen für schwenkbare Fahrzeugklappen bekannt, die mit einem ersten Ende gelenkig an einem Karosserieteil des Fahrzeugs und mit einem zweiten Ende gelenkig an einer Fahrzeugklappe angeschlossen sind. Die Antriebsvorrichtungen sind dabei in der Regel als Linearantriebe ausgebildet, so dass im Betrieb das erste Ende der Antriebsvorrichtung und das zweite Ende der Antriebsvorrichtung relativ zueinander linear verfahrbar sind, wodurch die Fahrzeugklappe motorisch angetrieben verschwenkt wird. Dabei kommt der Antriebsvorrichtung zum einen die Aufgabe zu, dass die Fahrzeugklappe automatisch zwischen einer Schließstellung und einer Öffnungsstellung schwenkbar ist und ferner eine Feststellung der Fahrzeugklappe in einer beliebigen Position zwischen der vollständig geschlossenen bzw. vollständig geöffneten Stellung bereitzustellen. Entsprechend sollen die Antriebsvorrichtungen für schwenkbare Fahrzeugklappen neben der Antriebsfunktion auch eine Bremsfunktion bei der Verstellung der Fahrzeugklappe bereitstellen.

DE 197 52 543 A1 zeigt eine Magnetbremse mit einem ersten drehfesten Bremselement und einem zweiten drehbaren Bremselement. In einer Bremsstellung der Magnetbremse stehen das erste Bremselement und das zweite Bremselement miteinander in reibschlüssiger oder formschlüssiger Verbindung, so dass das erste Bremselement vom zweiten Bremselement gehalten oder zumindest gebremst wird. Die Magnetbremse umfasst dabei einen Elektromagneten, welcher bei entsprechender Bestromung das erste und zweite Bremselement zueinander in die Bremsstellung bzw. einer gelösten Stellung verlagert, wobei die Bremskraft in der Bremsstellung einen bestimmten Wert aufweist. Die Magnetbremse umfasst neben einem Elektromagneten einen Permanentmagneten sowie eine Federvorrichtung, welche das erste Bremselement und das zweite Bremselement in Richtung der Bremsstellung vorspannt. Nachteilig an der gezeigten Magnetbremse ist, dass die Bremskraft nicht flexibel angepasst werden kann, sondern im Wesentlichen nur einen bestimmten Wert in der Bremsstellung annimmt.

DE 10 2007 026 796 A1 zeigt einen Türfeststeller für Fahrzeugtüren, wobei der Türfeststeller eine Bremsvorrichtung umfasst, wobei die Bremsvorrichtung ein erstes Bremselement und ein zweites Bremselement umfasst, welche jeweils einander zugewandte Reibflächen aufweisen, wobei durch Kontakt der Reibflächen eine Drehbewegung des ersten Bremselementes relativ zu dem zweiten Bremselement abgebremst wird. Das erste Bremselement und das zweite Bremselement sind dabei aus einem ferromagnetischen Material gefertigt, wobei die Bremselemente reversibel magnetisierbar sind. Die Bremsvorrichtung umfasst weiter ein Federelement, welches das erste Bremselement relativ zu dem zweiten Element hin zu einer gelösten Stellung der Bremsvorrichtung vorspannt. Nachteilig an dem gezeigten Türfeststeller ist, dass die Bremskraft der Bremsvorrichtung von dem Federelement wesentlich beeinflusst wird und zudem der Elektromagnet bestromt werden muss, um eine permanente Bremswirkung zu erzielen. Durch das Vorsehen einer Feder ist die Bremsvorrichtung zudem fehleranfällig.

DE 39 06 069 A1 zeigt eine Bremsvorrichtung mit einem ersten Bremselement und einem zweiten Bremselement, die jeweils einen Bremsbelag aufweisen und denen jeweils mindestens eine Druckfeder zugeordnet ist. Die Bremsvorrichtung weist ein Gehäuse auf, in dem eine stromdurchflossene Magnetspule aufgenommen ist. Die den Bremselementen jeweils zugeordneten Druckfedern spannen die Bremselemente so vor, dass die jeweiligen Bremsbeläge miteinander in Kontakt stehen und somit die Bremsvorrichtung sich in einer Bremsstellung befindet. Durch Bestromung der Spule werden die Bremselemente relativ zueinander so verlagert, so dass die Bremsvorrichtung in einer gelösten Stellung gebracht wird, d.h. die Bremsbeläge der Bremselemente sich nicht mehr berühren. Nachteilig an der gezeigten Bremsvorrichtung ist, dass jedem Bremselement zusätzliche Federn zugeordnet sind, wodurch die Fehleranfälligkeit der Bremsvorrichtung steigt und die Bremskraft nicht präzise gesteuert werden kann.

DE 10 2015 221 067 A1 zeigt eine Antriebsvorrichtung für eine schwenkbare Fahrzeugklappe mit einem ersten Gehäuseteil und einem zweiten Gehäuseteil, wobei das erste Gehäuseteil und das zweite Gehäuseteil in Richtung der axialen Erstreckung der Antriebsvorrichtung zueinander beweglich ausgebildet sind. An dem ersten Gehäuseteil ist eine Spindelstange drehbar angeordnet und an dem zweiten Gehäuseteil ist eine Spindelmutter drehfest angeordnet. In dem ersten Gehäuseteil ist eine Antriebsvorrichtung angeordnet, wobei die Antriebsvorrichtung einen Elektromotor umfasst. Der Elektromotor weist ein Gehäuse auf, wobei an einer Innenwand des Gehäuses ein erstes Bremselement, bestehend aus einem Rückschlusselement und ein mit dem Rückschlusselement fest verbundenes Permanentmagnetelement, fest verbunden ist. Weiter umfasst der Elektromotor eine Antriebswelle, auf der ein zweites Bremselement, ebenfalls aus einem Rückschlusselement und einem Permanentmagnetelement bestehend, drehfest angeordnet ist. Zwischen den Permanentelementen ist ein Zwischenelement angeordnet. Die Permanentmagnetelemente dienen zur Erzeugung einer Bremskraft zwischen den Bremselementen und so einer Abbremsung der Antriebswelle des Elektromotors. Nachteilig an der gezeigten Antriebsvorrichtung ist, dass die Bremskraft nicht variabel ist und die Haltekraft nicht flexibel ist, da diese durch die Permanentmagnete vorgegeben und nicht weiter veränderlich ist.

DE 10 2016 207 415 A1 zeigt eine Antriebsvorrichtung, umfassend ein erstes Gehäuseteil und ein zweites Gehäuseteil, wobei das erste Gehäuseteil und das zweite Gehäuseteil in Richtung der axialen Erstreckung der Antriebsvorrichtung zueinander beweglich ausgebildet sind. Weiter umfasst die Antriebsvorrichtung eine drehbar an dem ersten Gehäuseteil angeordnete Spindelstange und eine an dem zweiten Gehäuseteil drehfest angeordnete Spindelmutter. Die Antriebsvorrichtung umfasst weiter eine Bremsvorrichtung mit einem ersten Bremselement und einem zweiten Bremselement, welche jeweils als Reibungsplatten ausgebildet sind. Das erste Bremselement ist drehfest auf einer Motorwelle eines Motors angeordnet, welcher zum Antrieb einer Drehbewegung der Spindelstange dient. Das zweite Bremselement ist drehfest jedoch gleitend an dem ersten Gehäuseteil angeordnet. Das zweite Bremsglied wird durch eine Feder in Richtung auf das erste Bremsglied vorgespannt, sodass diese reibend miteinander wechselwirken und eine Bremsung der drehfest mit dem ersten Bremselement verbundenen Motorwelle bewirken können. Die Bremsvorrichtung umfasst weiter eine Magnetanordnung, welche als Elektromagnet ausgebildet ist. Die Magnetanordnung erzeugt ein Magnetfeld, welches das zweite Bremselement entgegen der Vorspannkraft der Feder in axialer Richtung verlagert, sodass das erste Bremselement nicht in reibendem Kontakt mit dem zweiten Bremsglied ist.

EP 2 432 101 A1 zeigt eine Antriebsvorrichtung mit einem Gehäuse, eine drehbar an dem Gehäuse angeordnete Spindelstange und eine drehfest an dem Gehäuse angeordnete Spindelmutter. Die Antriebsvorrichtung umfasst weiter einen Motor zum Antrieb einer Drehbewegung der Spindelstange über eine Wellen-Kupplung und eine Bremsvorrichtung, welche eine Bewegung des Motor bremst. Die Bremsvorrichtung umfasst ein erstes Bremselement, welches drehfest mit einem Elektromagneten gekoppelt ist und ein zweites drehfest mit dem Motor verbundenes Bremselement. Das erste Bremselement wirkt zur Erzeugung einer Bremskraft mit dem zweiten Bremselement zusammen, um den Motor zum Stillstand zu bringen, wobei das erste Bremselement mittels einer Feder in Richtung auf das zweite Bremselement vorgespannt ist. Der Elektromagnet erzeugt bei Bestromung ein Magnetfeld, welches das erste Bremselement axial weg von dem zweiten Bremselement verlagert und so eine angetriebene Drehbewegung der Spindelstange mittels des Motors freigibt.

DE 10 2014 220 414 A1 zeigt eine Bremsvorrichtung für eine Antriebsvorrichtung, umfassend ein erstes Gehäuseteil, ein zweites Gehäuseteil, ein erstes Bremselement, welches drehfest mit dem ersten Gehäuseteil verbunden ist, und ein zweites Bremselement, welches drehfest mit einer als Spindelstange ausgebildetes Antriebselement verbunden ist. Weiter umfasst die Bremsvorrichtung eine Magnetanordnung zur Erzeugung eines Magnetfeldes, welche aus einem Permanentmagneten besteht, welcher einstückig mit dem zweiten Bremselement ausgebildet ist.

Es ist die Aufgabe der Erfindung, eine Antriebsvorrichtung für eine schwenkbare Fahrzeugklappe anzugeben, welche eine einfache und zuverlässige automatische Verschwenkung sowie eine flexible Haltekraft für eine Fahrzeugklappe bereitstellt.

Die vorgenannte Aufgabe wird erfindungsgemäß durch eine Antriebsvorrichtung mit den Merkmalen des Patentanspruchs 1 gelöst.

Nach einem Aspekt der Erfindung ist eine Antriebsvorrichtung für eine schwenkbare Fahrzeugklappe geschaffen, umfassend ein erstes Gehäuseteil und ein zweites Gehäuseteil, wobei das erste Gehäuseteil und das zweite Gehäuseteil in Richtung der axialen Erstreckung der Antriebsvorrichtung zueinander beweglich ausgebildet sind. Die Antriebsvorrichtung umfasst weiter eine Spindelstange, wobei die Spindelstange drehbar an einem von erstem Gehäuseteil und zweitem Gehäuseteil angeordnet ist. Weiter umfasst die Antriebsvorrichtung eine an dem anderen von erstem Gehäuseteil und zweitem Gehäuseteil drehfest angeordnete Spindelmutter und eine Bremsvorrichtung. Die Bremsvorrichtung umfasst dabei ein erstes Bremselement, ein mit einem von erstem Gehäuseteil und zweitem Gehäuseteil drehfest verbundenes zweites Bremselement, wobei das erste Bremselement mit dem zweiten Bremselement zur Erzeugung einer Bremskraft zusammenwirken kann. Schließlich umfasst die Antriebsvorrichtung eine Magnetanordnung zur Erzeugung eines Magnetfeldes. Die erfindungsgemäße Antriebsvorrichtung zeichnet sich dabei dadurch aus, dass das erste Bremselement entlang der axialen Richtung der Spindelstange durch das Magnetfeld verlagerbar ist. Hierdurch wird es vorteilhaft ermöglicht, über eine Steuerung der Magnetfeldstärke des Magnetfeldes kontrolliert Einfluss auf die durch die Bremsvorrichtung verursachte Bremskraft zu nehmen. Besonders vorteilhaft lässt sich über eine Einstellung der Magnetfeldstärke ein stetiges Halten der Fahrzeugklappe für verschiedenste Situationen und äußeren Umständen wie beispielsweise Temperatur, Öffnungswinkel und von außen auf die Fahrzeugklappe wirkende Kräfte realisieren.

Zweckmäßig sind das erste Gehäuseteil und das zweite Gehäuseteil Bestandteile eines Gehäuses der Antriebsvorrichtung, wobei das erste Gehäuseteil und das zweite Gehäuseteil konzentrisch zueinander angeordnet sind. Vorteilhaft wird durch das Gehäuse ermöglicht bewegliche mechanische und elektrische Bestandteile der Antriebsvorrichtung vor Schmutz und sonstigen äußeren Einflüssen zu schützen. Zudem wird hierdurch vermieden, dass ein Benutzer mit inneren Bestandteilen der Antriebsvorrichtung in Berührung kommt und sich womöglich dabei verletzt.

In einer besonders bevorzugten Ausgestaltung umfasst die Magnetanordnung einen Elektromagneten. Hierdurch wird insbesondere vorteilhaft erreicht, dass die Magnetfeldstärke und damit die Bremskraft, welche durch die Bremsvorrichtung erzeugt wird, durch Festlegung der durch den Elektromagneten fließenden Stromstärke definiert werden kann. Hierbei umfasst die Bremsvorrichtung besonders bevorzugt eine elektrische Steuerung, welche die Stromstärke bzw. elektrische Leistung des Elektromagneten steuern kann. Besonders bevorzugt ist die Steuerung der Stromstärke bzw. elektrischen Leistung des Elektromagneten programmierbar, so dass ein vordefiniertes Verhalten der Bremsvorrichtung in Abhängigkeit der jeweils herrschenden Umstände möglich wird. Dabei hängt die von der elektrischen Steuerung gesteuerte Stromstärke bzw. elektrische Leistung von äußeren Parametern wie beispielsweise die momentane Beschleunigung der schwenkbaren Fahrzeugklappe bzw. die von außen auf die schwenkbare Fahrzeugklappe wirkenden Kräfte.

Bevorzugt umfasst die Magnetanordnung einen Permanentmagneten. Hierdurch wird vorteilhaft ermöglicht, dass eine permanente Bremskraft durch die Bremsvorrichtung bereitgestellt wird, ohne dass hierfür eine zusätzliche elektrische Leistung benötigt wird. Die Bremskraft kann zweckmäßig durch entsprechende Auswahl des Permanentmagneten bzw. der durch den Permanentmagneten erzeugten Magnetfeldstärke festgelegt werden. Besonders bevorzugt umfasst die Bremsvorrichtung sowohl einen Elektromagneten als auch einen Permanentmagneten, da so auch im unbestromten Zustand des Elektromagneten einer Bremskraft erzeugt wird, wobei durch entsprechende Auswahl der Stromrichtung durch den Elektromagneten eine Aufhebung der Bremskraft sowie eine Verstärkung der Bremskraft möglich wird.

Der Permanentmagnet zieht besonders vorteilhaft das erste Bremselement in Richtung auf das zweite Bremselement magnetisch an. In einer Weiterbildung ist zudem vorgesehen, dass das erste Bremselement in axialer Richtung der Spindelstange soweit in Richtung des zweiten Bremselementes verlagerbar ist, dass sich das erste Bremselement und das zweite Bremselement berühren können. Besonders bevorzugt weist das erste Bremselement eine erste Reibfläche und das zweite Bremselement eine zweite Reibfläche auf. Die erste Reibfläche und die zweite Reibfläche sind dabei zweckmäßig einander zugewandt und im Wesentlichen senkrecht zu der axialen Richtung der Spindelstange ausgerichtet. Vorteilhaft kann so die durch die Reibung der Freiflächen zueinander erzeugte Bremskraft auf die Spindelstange durch Steuerung des Elektromagneten situationsabhängig eingestellt werden. Dabei ist insbesondere vorgesehen, dass das erste Bremselement und das zweite Bremselement soweit relativ zueinander verlagert werden können, dass sich das erste Bremselement und das zweite

Bremselement nicht berühren. In diesem Fall wird sowohl das manuelle Öffnen der Fahrzeugklappe und zudem das motorische Verfahren der Fahrzeugklappe erleichtert, so dass vorteilhaft der in der Antriebsvorrichtung vorgesehene Motor kleiner dimensioniert werden kann.

In einer zweckmäßigen Ausgestaltung ist die Magnetanordnung an dem ersten Bremselement oder dem zweiten Bremselement angeordnet. Besonders vorteilhaft ist vorgesehen, dass die Magnetanordnung an dem zweiten Bremselement, welches mit einem von erstem Gehäuseteil und zweitem Gehäuseteil drehfest verbunden ist, angeordnet ist. Vorteilhaft wird hierdurch der benötigte Bauraum für die Bremsvorrichtung verringert und so die gesamte Antriebsvorrichtung platzsparender ausgestaltet. Dabei ist zweckmäßigerweise vorgesehen, dass das Magnetfeld, welches durch die Magnetanordnung erzeugt werden kann, dass eine von erstem Bremselement und zweitem Bremselement, welches axial verlagerbar ausgebildet ist, durchdringt. Hierdurch wird die axiale Verlagerung des Bremselementes bzw. die Bremskraft zwischen Bremskraft zwischen erstem Bremselement und zweitem Bremselement über die Magnetfeldstärke vorteilhaft gesteuert.

Besonders vorteilhaft ist in einer Weiterbildung vorgesehen, dass das eine von erstem Bremselement und zweitem Bremselement, welches axial verlagerbar ausgebildet ist, zumindest teilweise ferromagnetisch ausgebildet ist. Hierdurch wird zweckmäßigerweise erreicht, dass die Magnetanordnung durch das von ihr erzeugte Magnetfeld eine Kraft in axialer Richtung auf das eine von erstem Bremselement und zweitem Bremselement, welches axial verlagerbar ausgebildet ist, ausübt. Besonders vorteilhaft ist der magnetische Fluss der Magnetanordnung und somit die Bremskraft der Bremsvorrichtung über eine elektrische Steuerung regelbar.

Zweckmäßigerweise umfasst die Antriebsvorrichtung ein Kugellager, wobei das Kugellager einen Abschnitt der Spindelstange radial umläuft und die Spindelstange drehbar abstützt. Besonders bevorzugt ist das Kugellager zwischen der Spindelmutter und der Bremsvorrichtung angeordnet. Vorteilhaft wird über die Beabstandung des Kugellagers zu der Magnetanordnung verhindert, dass das Kugellager das Magnetfeld der Magnetanordnung innerhalb der Bremsvorrichtung bzw. umgekehrt das Magnetfeld metallische Bestandteile des Kugellager beeinflusst.

In einer Weiterbildung der Antriebsvorrichtung umfasst das Gehäuse ein drittes Gehäuseteil. In dem dritten Gehäuseteil ist bevorzugt ein Antriebsmittel zum Antrieb der Spindelstange angeordnet. Dabei ist zweckmäßigerweise an einem dem dritten Gehäuseteil abgewandten Ende des ersten Gehäuseteiles eine erste Befestigungsvorrichtung zur gelenkigen Verbindung mit einem von Fahrzeugklappe und Fahrzeugkarosserie angeordnet. Weiter ist zweckmäßig vorgesehen, dass an einem dem ersten Gehäuseteil abgewandten Ende des dritten Gehäuseteiles eine zweite Befestigungsvorrichtung zur gelenkigen Verbindung mit dem anderen von Fahrzeugklappe und Fahrzeugkarosserie angeordnet ist. Eines von erster Befestigungsvorrichtung und zweiter Befestigungsvorrichtung ist dabei als Kugelpfanne ausgebildet. Besonders bevorzugt ist die andere von erster Befestigungsvorrichtung und zweiter Befestigungsvorrichtung als Kugelgelenkauge ausgebildet. Vorteilhaft kann so die Antriebsvorrichtung gelenkig zwischen einer Fahrzeugkarosserie und einer gegenüber der Fahrzeugkarosserie zu verschwenkenden Fahrzeugklappe angeordnet werden.

In einer besonders bevorzugten Ausgestaltung ist vorgesehen, dass das dem ersten Gehäuseteil abgewandte Ende des dritten Gehäuseteils zumindest teilweise aus Kunststoff besteht. Vorteilhaft wird hierdurch das Gesamtgewicht der Antriebsvorrichtung gesenkt. Besonders vorteilhaft ist weiter vorgesehen, dass das dem dritten Gehäuseteil zugewandte Ende der zweiten Befestigungsvorrichtung formschlüssig in dem teilweise aus Kunststoff bestehenden dem ersten Gehäuseteil abgewandten Ende des dritten Gehäuseteils aufgenommen ist. Besonders bevorzugt ist eine Umspritzung des dem dritten Gehäuseteil zugewandten Endes der zweiten Befestigungsvorrichtung vorgesehen. Vorteilhaft ergeben sich so eine besonders hohe Festigkeit und eine gute Abdichtung der Befestigungsvorrichtung gegenüber äußeren Einflüssen wie Feuchtigkeit.

Zweckmäßigerweise ist das dem ersten Gehäuseteil zugewandte Ende der ersten Befestigungsvorrichtung formschlüssig in dem ersten Gehäuseteil zumindest abschnittsweise aufgenommen. Besonders bevorzugt ist vorgesehen, dass das dem ersten Gehäuseteil zugewandte Ende der ersten Befestigungsvorrichtung in einer Öffnung des ersten Gehäuseteils eingepresst ist. Dabei ist das erste Gehäuseteil bevorzugt hohlzylindrisch ausgebildet und umläuft konzentrisch das dem ersten Gehäuseteil zugewandte Ende der ersten Befestigungsvorrichtung.

In einer bevorzugten Ausgestaltung weist die erste Befestigungsvorrichtung eine radial umlaufende erste Nut auf, wobei ein bezüglich des Innendurchmessers nach innen verjüngter Abschnitt des ersten Gehäuseteils in die Nut hineinragt. Hierdurch wird vorteilhaft erreicht, dass die erste Befestigungsvorrichtung in axialer Richtung in dem ersten Gehäuseteil sicher aufgenommen und gegenüber einer Verlagerung in axialer Richtung festgelegt ist.

Zweckmäßigerweise weist die erste Befestigungsvorrichtung eine zweite radial umlaufende Nut auf, wobei ein Dichtring in der zweiten radial umlaufenden Nut vorgesehen ist, welcher die erste Befestigungsvorrichtung gegenüber dem ersten Gehäuseteil abdichtet. Vorteilhaft wird so verhindert, dass Feuchtigkeit in das Gehäuse eindringen kann.

Besonders bevorzugt ist vorgesehen, dass das andere von erstem Gehäuseteil und zweitem Gehäuseteil mindestens eine parallel zur axialen Erstreckung der Spindelstange verlaufende Nut umfasst. Die Spindelmutter weist zweckmäßigerweise zumindest einen radialen Vorsprung aufweist, welcher in die zumindest eine Nut hineinragt. Vorteilhaft wird hierdurch eine Antriebsvorrichtung geschaffen, bei der eine externe Drehmomentabstützung der Spindelmutter nicht nötig ist.

In einer Weiterbildung der Antriebsvorrichtung ist vorgesehen, dass die Spindelmutter entlang der axialen Erstreckung der zumindest einen Nut verlagerbar ist. Hierdurch wird vorteilhaft realisiert, dass über die Drehung der Spindelstange, welche ein Außengewinde aufweist, die wiederum mit einem in der Spindelmutter vorgesehenem Innengewinde in Eingriff steht, die Spindelmutter entlang der axialen Erstreckung der Antriebsvorrichtung bzw. der Spindelstange verlagert werden kann.

Zweckmäßigerweise ist die zumindest eine Nut als Negativform des zumindest einen radialen Vorsprungs ausgebildet. Vorteilhaft ergibt sich, dass die Spindelmutter zum einen exakt entlang der Nut geführt wird und zum anderen die Spindelmutter gegenüber durch die Spindelstange übertragene Drehmomente relativ zu dem Gehäuse abgestützt ist.

Zweckmäßigerweise umfasst die Antriebsvorrichtung ein Antriebselement, wobei das Antriebsmoment konzentrisch zu dem dritten Gehäuseteil in einem Antriebsgehäuse angeordnet ist. Besonders vorteilhaft ist vorgesehen, dass das Antriebsgehäuse als Hohlzylinder ausgebildet ist und zumindest abschnittsweise entlang seines Außenumfangs mit dem dritten Gehäuseteil verschweißt ist. Hierdurch wird vorteilhaft erreicht, dass das Antriebselement bzw. das aufnehmende Antriebsgehäuse besonders sicher und fest in dem dritten Gehäuseteil angeordnet ist. Weiter wird vorteilhaft ermöglicht, weitere Montagemöglichkeiten, wie beispielsweise die Verlegung von benötigten elektrischen Zuleitungen, insbesondere für den Betrieb der in der Bremsvorrichtung vorgesehenen Magnetanordnung, zu realisieren. Hierzu ist ein entsprechender Spalt zwischen dem Außenumfang des Antriebsgehäuses und den Innenumfang des dritten Gehäuseteiles vorgesehen, durch welchen elektrischen Zuleitungen verlegt werden können.

Zweckmäßigerweise ist vorgesehen, dass das erste Gehäuseteil gegenüber dem zweiten Gehäuseteil translatorisch mittels eines Dichtrings abgedichtet ist. Hierdurch wird vorteilhaft auch während einer Verlagerung des ersten Gehäuseteils gegenüber dem zweiten Gehäuseteil eine ausreichende Abdichtung gegenüber Feuchtigkeit erreicht. Um zu verhindern, dass der Dichtring sich während einer Verlagerung des ersten Gehäuseteiles gegenüber dem zweiten Gehäuseteil in axialer Richtung verlagert, ist in einer vorteilhaften Ausgestaltung vorgesehen, dass der Dichterin gegen eine axiale Verlagerung mittels eines Sicherungselementes gesichert ist. Besonders bevorzugt ist das Sicherungselement als Gleitbuchse ausgebildet. Zweckmäßigerweise ist die Gleitbuchse mittels eines Rastelements an dem zweiten Gehäuseteil befestigbar. Besonders vorteilhaft wird hierdurch ermöglicht, den Dichtring auf einfache Art und Weise auszutauschen. In einer bevorzugten Ausgestaltung ist der Dichtring mittels zumindest eines Stützringes zusätzlich gegen eine axiale Verlagerung gesichert.

Weitere Vorteile, Merkmale und Eigenschaften der Erfindung ergeben sich aus der nachstehenden Beschreibung eines bevorzugten Ausführungsbeispiels sowie aus den abhängigen Ansprüchen.

Die Erfindung wird nunmehr unter Bezugnahme auf die anliegenden Zeichnungen anhand eines bevorzugten Ausführungsbeispiels der Erfindung näher erläutert.
- Fig. 1: zeigt einen Längsschnitt durch ein Ausführungsbeispiel einer erfindungsgemäßen Antriebsvorrichtung.
- Fig. 2: zeigt eine vergrößerte Ansicht einer Bremsvorrichtung der Antriebsvorrichtung aus Fig. 1.
- Fig. 3: zeigt eine an einem Fahrzeugkarosserieteil angeordnete Fahrzeugklappe mit einer Antriebsvorrichtung.

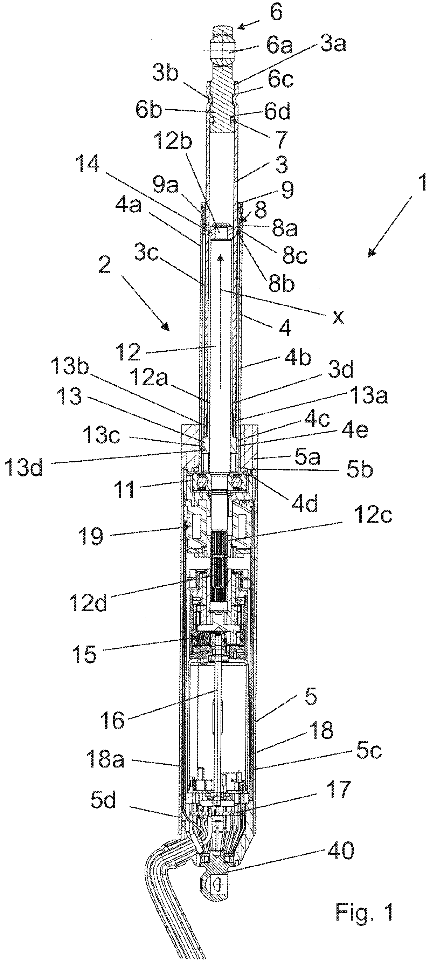

Fig. 1 zeigt in einer geschnittenen Ansicht ein bevorzugtes Ausführungsbeispiel einer Antriebsvorrichtung 1. Die Antriebsvorrichtung 1 umfasst dabei ein Gehäuse 2, welches ein erstes Gehäuseteil 3, ein zweites Gehäuseteil 4 und ein drittes Gehäuseteil 5 umfasst. Das erste, zweite und dritte Gehäuseteil 3, 4, 5 sind jeweils als im Wesentlichen konzentrisch zueinander angeordnete Hohlzylinder ausgebildet. Das erste Gehäuseteil 3 ist aus Stahl gefertigt, wobei das dem zweiten Gehäuseteil 4 abgewandte erste Ende 3a des ersten Gehäuseteiles 3 eine Öffnung aufweist, in dem eine erste Befestigungsvorrichtung 6 zur gelenkigen Verbindung der Antriebsvorrichtung 1 an einem von Fahrzeugkarosserie und Fahrzeugklappe zumindest abschnittsweise aufgenommen ist.

Die erste Befestigungsvorrichtung 6 weist an einem dem ersten Gehäuseteil 3 abgewandten Ende ein Kugelgelenkauge 6a auf, wobei das dem Kugelgelenkauge 6a abgewandte Ende 6b der ersten Befestigungsvorrichtung 6 eine erste radial umlaufende Nut 6c und eine zweite radial umlaufende Nut 6d aufweist. Die erste radial umlaufende Nut 6c ist näher an dem Kugelgelenkauge 6a angeordnet als die zweite radial umlaufende Nut 6d. Im Bereich der ersten radial umlaufenden Nut 6c weist das erste Gehäuseteil 3 eine Verjüngung 3b auf, wobei der dabei gebildete verjüngte Abschnitt 3b des ersten Gehäuseteiles 3 in die erste radial umlaufende Nut 6a hineinragt, so dass hierdurch die erste Befestigungsvorrichtung 6 an dem ersten Gehäuseteil 3 axial festgelegt ist. Weiter ist in der zweiten radial umlaufenden Nut 6d der ersten Befestigungsvorrichtung 6 ein Dichtring 7 vorgesehen, welcher die erste Befestigungsvorrichtung 6 gegenüber dem ersten Gehäuseteil 3 abdichtet.

Das erste Gehäuseteil 3 weist gegenüber dem zweiten Gehäuseteil 4 einen kleineren Außendurchmesser auf und ist zumindest abschnittsweise konzentrisch in dem hohlzylindrisch ausgebildeten zweiten Gehäuseteil 4 verlagerbar aufgenommen. Zur Abdichtung des ersten Gehäuseteils 3 gegenüber dem zweiten Gehäuseteil 4 ist an einem ersten Ende 4a des zweiten Gehäuseteiles 4 eine Dichtungsvorrichtung 8 vorgesehen. Die Dichtungsvorrichtung 8 ist in axialer Richtung der Antriebsvorrichtung 1 mittels einer Gleitbuchse 9 fixiert. Die Gleitbuchse 9 weist ein Rastelement 9a auf, welches als Schnapphaken ausgebildet ist. Die Dichtungsvorrichtung 8 ist in radialer Richtung zwischen einer Innenwand 4b des zweiten Gehäuseteils 4 und einer Außenwand 3c des ersten Gehäuseteiles 3 angeordnet. Die Dichtungsvorrichtung 8 umfasst zwei Stützringe 8a, 8b, zwischen denen ein Dichtungsring 8c in axialer Richtung festgelegt ist. Der Dichtungsring 8c ist dabei bevorzugt als x-Ring ausgebildet. Hierdurch wird vorteilhaft ermöglicht, dass das erste Gehäuseteil 3 und das zweite Gehäuseteil 4 relativ zueinander verlagerbar sind, wobei das Eindringen von Feuchtigkeit oder Schmutz in das Gehäuse 2 mittels der Dichtungsvorrichtung 8 verhindert wird.

Das zweite Gehäuseteil 4 ragt zumindest abschnittsweise mit seinem dem ersten Ende 4a abgewandten zweiten Ende 4c in ein erstes Ende 5a des dritten Gehäuseteiles 5 hinein. Das zweite Ende 4c des zweiten Gehäuseteiles 4 weist einen ringförmigen Kragbereich 4d auf, welcher an einer innen angeordneten Stufe 5b des dritten Gehäuseteiles 5 anliegt. Hierdurch wird sichergestellt, dass das zweite Gehäuseteil 4 in axialer Richtung hin zu der ersten Befestigungsvorrichtung 6 festgelegt ist. An der der Stufe 5b des dritten Gehäuseteiles 5 abgewandte Stirnseite des Kragbereiches 4d liegt ein Kugellager 11 an, welches ein das Gehäuse 2 zumindest abschnittsweise konzentrisch durchsetzende Spindelstange 12 radial umläuft und so drehbar abstützt.

Die Spindelstange 12 weist ein Außengewinde 12a auf, wobei das Außengewinde 12a mit einem Innengewinde 13a einer Spindelmutter 13 in Eingriff steht. Die Spindelmutter 13 ist drehfest an einem zweiten Ende 3d des ersten Gehäuseteiles 3 angeordnet, so dass bei einer Drehbewegung der Spindelstange 12 die Spindelmutter 13 gemeinsam mit dem ersten Gehäuseteil 3 relativ zu dem zweiten Gehäuseteil 4 in axialer Richtung verlagert wird. Dabei weist die Spindelmutter 13 einen in das zweite Ende 3d des ersten Gehäuseteiles 3 hineinragenden ersten Abschnitt 13b auf, so dass die Spindelmutter 13 und das erste Gehäuseteil 3 miteinander verbunden sind. Ein zweiter Abschnitt 13c der Spindelmutter weist zumindest einen in radialer Richtung hervorstehenden Vorsprung 13d auf, welcher in eine entlang der Innenwand 4b des zweiten Gehäuseteils verlaufenden Nut 4e hineinragt.

Die Spindelstange 12 weist an einem ersten Ende 12b einen Führungsring 14 auf, welcher einer radialen Führung der Spindelstange 12 in dem ersten Gehäuseteil 3 dient. An einem zweiten Ende 12c der Spindelstange 12 weist die Spindelstange 12 mehrere in axialer Richtung verlaufende Kerben 12d auf, welche dem Antrieb der Drehbewegung der Spindelstange 12 dienen. Das zweite Ende 12d der Spindelstange 12 steht dabei über die in axialer Richtung x der Spindelstange verlaufenden Kerben 12d mit einem Getriebe 15 in drehfestem Eingriff, wobei das Getriebe 15 über eine Kopplungsstange 16 mit einem Antriebselement 17 verbunden ist. Das Antriebselement 17 ist in einem hohlzylindrischen Antriebsgehäuse 18 aufgenommen, wobei die Außenwand 18a des Antriebsgehäuses18 mit einer Innenwand 5c des dritten Gehäuseteiles 5 zumindest abschnittsweise verschweißt ist. An einem zweiten Ende 5d des dritten Gehäuseteiles 5 ist eine zweite Befestigungsvorrichtung 40 angeordnet. Die Befestigungsvorrichtung 40 ist als Kugelpfanne ausgebildet, so dass die Antriebsvorrichtung 1 mit einem von Fahrzeugkarosserie und Fahrzeugklappe gelenkig verbunden werden kann.

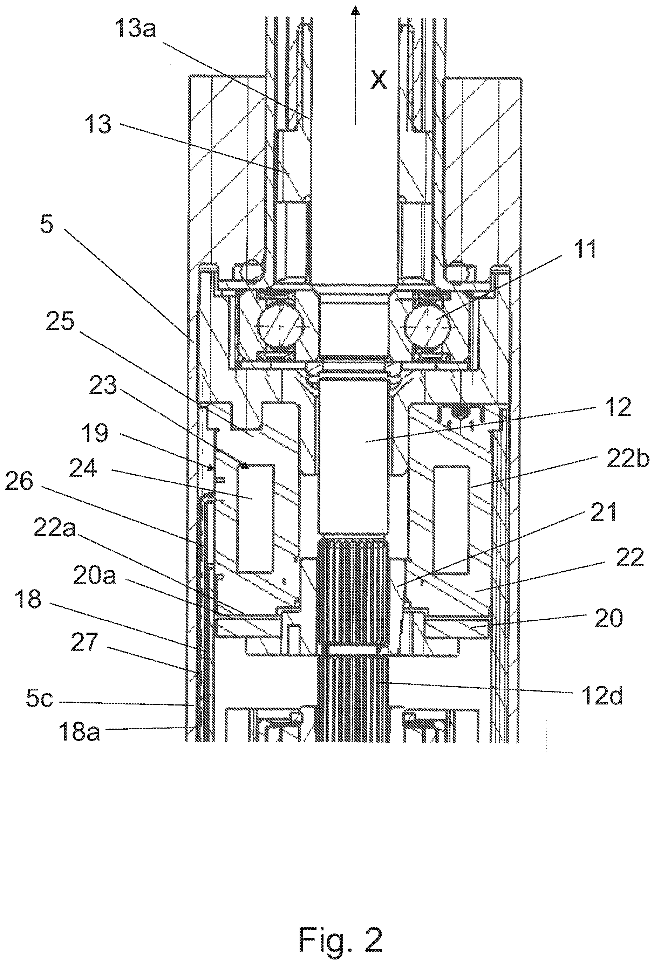

In axialer Richtung zwischen dem Getriebe 15 und dem Kugellager 11 ist eine Bremsvorrichtung 19 vorgesehen. Der Aufbau der Bremsvorrichtung 19 und deren Wirkungsweise wird nachstehend anhand der Fig. 2 näher erläutert.

Fig. 2 zeigt eine vergrößerte Ansicht einer Bremsvorrichtung der Antriebsvorrichtung aus Fig. 1. Die Bremsvorrichtung 19 umfasst ein mit der Spindelstange 12 drehfest verbundenes erstes Bremselement 20, welches auf einer drehfest auf den Kerben 12d der Spindelstange 12 aufgepressten Flanschnabe 21 schwimmend bezüglich der axialen Richtung x gelagert ist.

Hierdurch kann das Bremselement 20 in axialer Richtung der Antriebsvorrichtung 1 verlagert werden, während das Bremselement 20 sich gemeinsam mit der Flanschnabe 21 bzw. der angetriebenen Spindelstange 12 dreht. Das Bremselement 20 ist als ringförmige Bremsscheibe mit einer ersten Reibfläche 20a ausgebildet, welche aus einem ferromagnetischen Material gefertigt ist.

Die Bremsvorrichtung 19 umfasst weiter ein zweites Bremselement 22, welches drehfest an der Innenwand 5c des dritten Gehäuseteiles 5 anliegt. Das zweite Bremselement 22 fungiert dementsprechend als drehfester Bremsstator, wobei das zweite Bremsenelement 22 eine der ersten Reibfläche 20a des ersten Bremselementes 20 zugewandte zweite Reibfläche 22a aufweist, wobei sich die erste Reibfläche 20a die zweite Reibfläche 22a in dem hier gezeigten gelösten Zustand der Bremsvorrichtung 19 nicht berühren. Das zweite Bremselement 22 weist einen ringförmigen Hohlraum 22b auf, in dem eine Magnetanordnung 23 aufgenommen ist.

Die Magnetanordnung 23 umfasst einen Elektromagneten 24 und einen Permanentmagneten 25, welche in axialer Richtung der Antriebsvorrichtung 1 hintereinander angeordnet sind. Dabei ist der Permanentmagnet 25 weiter von dem ersten Bremselement 20 beabstandet als der Elektromagnet 24. Der Elektromagnet 24 wird über elektrische Zuleitungen 26 mit Strom versorgt. Die elektrischen Zuleitungen 25 verlaufen in einem Spalt 27 zwischen dem Außenumfang 18a des Antriebsgehäuses 18 und der Innenwand 5c des dritten Gehäuseteiles 5.

Die Funktionsweise der Bremsvorrichtung 19 wird nachfolgend anhand des in Fig. 2 gezeigten Ausführungsbeispiels erläutert:

In dem in Fig. 2 gezeigten Zustand ist das erste Bremselement 20 so weit nach unten verlagert, dass sich erste Reibfläche 20a und die zweite Reibfläche 22a nicht berühren. Dieser Zustand kann je nach Konfiguration in einem unbestromten Zustand des Elektromagneten 24 vorliegen, wenn das Magnetfeld des Permanentmagneten 25 derart orientiert ist, dass das ferromagnetische Bremselement 20 von dem Permanentmagneten 25 abgestoßen wird. Bevorzugt ist in dem vorliegenden Fall jedoch das Magnetfeld des Permanentmagneten 25 so orientiert, dass das erste Bremselement 20 in Richtung auf das zweite Bremselement 22 angezogen wird. Der gezeigte gelöste Zustand der Bremsvorrichtung 19 wird dabei durch ein dem durch den Permanentmagneten 25 erzeugte Magnetfeld entgegengesetzt orientierten magnetischen Fluss, der durch den Elektromagneten 24 erzeugt wird, erreicht. Für den Fall, dass eine erhöhte Bremskraft während des Verschwenkens der Fahrzeugklappe nötig ist, wird der Elektromagnet 24 abgeschaltet, so dass sich die erste Reibfläche 20a des ersten Bremselementes 20 und die zweite Reibfläche 22a des zweiten Bremselementes 22 berühren. Durch die hierbei auftretenden Reibungskräfte wird die Drehbewegung der mit dem ersten Bremselement 20 drehfest verbundenen Spindelstange 12 abgebremst. Falls die Bremskräfte noch weiter erhöht werden müssen, wird der Elektromagnet 24 in umgekehrter Orientierungsrichtung mit Strom versorgt, so dass der durch den Elektromagneten 24 erzeugte magnetische Fluss für eine erhöhte Anziehungskraft des ersten Bremselementes 20 hin zu dem zweiten Bremselement 22 sorgt.

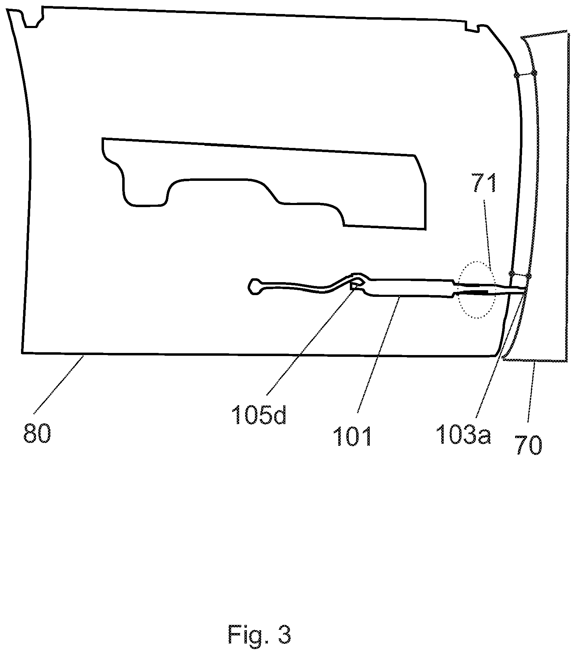

Fig. 3 zeigt eine an einem Fahrzeugkarosserieteil 70 verschwenkbar angeordnete Fahrzeugklappe 80 mit einer Antriebsvorrichtung 101. Die Antriebsvorrichtung 101 ist dabei mit einem ersten Ende 103a an dem Fahrzeugkarosserieteil 70 und mit einem zweiten Ende 105d an der Fahrzeugklappe 80 gelenkig angeschlossen, so dass bei einer Verlagerung des ersten Endes 103a relativ zu dem zweiten Ende 105d eine Verschwenkung der Fahrzeugklappe 80 erfolgt. Hierzu ist das erste Ende 103a der Antriebsvorrichtung 101 durch eine Aussparung 71 der Fahrzeugklappe 80 geführt.

Vorstehend wurde anhand eines Ausführungsbeispiels eine Antriebsvorrichtung gezeigt, bei der nur das erste Bremselement in axialer Richtung verlagerbar ist. Es versteht sich, dass zusätzlich auch das zweite Bremselement schwimmend gelagert sein kann, wobei das zweite Bremselement weiterhin drehfest gegenüber dem Gehäuse bleibt und das erste Bremselement sich mit der Spindelstange dreht.

Vorstehend wurde anhand eines Ausführungsbeispiels eine Antriebsvorrichtung gezeigt, bei der die Gehäuseteile zumindest teilweise ineinander hineinragen und gegeneinander abgedichtet sind. Die Gehäuseteile sind dementsprechend lang gestreckt ausgebildet, so dass das aus den Gehäuseteil zusammengesetzte Gehäuse die fast vollständige Länge der Antriebsvorrichtung umhüllt. Es versteht sich, dass die Gehäuseteile auch kurzbauend ausgebildet sein können, so dass diese nur die Spindelstange und die Spindelmutter umhüllen. Dabei müssen die Gehäuseteile auch nicht gegeneinander abgedichtet sein. Hierdurch lassen sich das Eigengewicht der Antriebsvorrichtung und die Materialkosten senken.

## Patentansprüche

1. Antriebsvorrichtung für eine schwenkbare Fahrzeugklappe, umfassend
ein erstes Gehäuseteil (3),
ein zweites Gehäuseteil (4), wobei das erste Gehäuseteil (3) und das zweite Gehäuseteil (4) in Richtung der axialen Erstreckung (x) der Antriebsvorrichtung (1) zueinander beweglich ausgebildet sind,
eine drehbar an einem von erstem Gehäuseteil (3) und zweitem Gehäuseteil (4) angeordnete Spindelstange (12), und
eine an dem anderen von erstem Gehäuseteil (3) und zweitem Gehäuseteil (4) drehfest angeordnete Spindelmutter (13),
eine Bremsvorrichtung (19), umfassend ein erstes Bremselement (20),
ein mit einem von erstem Gehäuseteil (3) und zweitem Gehäuseteil (4) drehfest verbundenes zweites Bremselement (22), wobei das erste Bremselement (20) mit dem zweiten Bremselement (22) zur Erzeugung einer Bremskraft zusammenwirken kann, und
eine Magnetanordnung (23) zur Erzeugung eines Magnetfeldes, **dadurch gekennzeichnet,**
**dass** das erste Bremselement (20) drehfest mit der Spindelstange (12) verbunden ist, und
**dass** das erste Bremselement (20) entlang der axialen Richtung (x) der Spindelstange (12) durch das Magnetfeld verlagerbar ist.

2. Antriebsvorrichtung nach Anspruch 1, **dadurch gekennzeichnet, dass** das erste Gehäuseteil (3) und das zweite Gehäuseteil (4) Bestandteile eines Gehäuses (2) der Antriebsvorrichtung (1) sind, wobei das erste Gehäuseteil (3) und das zweite Gehäuseteil (4) konzentrisch zueinander angeordnet sind.

3. Antriebsvorrichtung nach Anspruch 1 oder 2, **dadurch gekennzeichnet, dass** die Magnetanordnung (23) einen Elektromagneten (24) umfasst.

4. Antriebsvorrichtung nach einem der vorhergehenden Ansprüche,
**dadurch gekennzeichnet, dass** die Magnetanordnung (23) einen Permanentmagneten (25) umfasst.

5. Antriebsvorrichtung nach Anspruch 4, **dadurch gekennzeichnet, dass** der Permanentmagnet (25) das erste Bremselement (20) in Richtung auf das zweite Bremselement (22) magnetisch anzieht.

6. Antriebsvorrichtung nach einem der vorgehenden Ansprüche, **dadurch gekennzeichnet, dass** das erste Bremselement (20) in axialer Richtung (x) soweit in Richtung des zweiten Bremselementes (22) verlagerbar ist, dass sich das erste Bremselement (20) und das zweite Bremselement (22) einander berühren können.

7. Antriebsvorrichtung nach einem der vorhergehenden Ansprüche,
**dadurch gekennzeichnet, dass** das erste Bremselement (20) eine erste Reibfläche (20a) und das zweite Bremselement (22) eine zweite Reibfläche (22a) aufweist.

8. Antriebsvorrichtung nach Anspruch 7, **dadurch gekennzeichnet, dass** die erste Reibfläche (20a) und die zweite Reibfläche (22a) einander zugewandt und senkrecht zu der axialen Richtung (x) der Spindelstange (12) ausgerichtet sind.

9. Antriebsvorrichtung nach einem der vorhergehenden Ansprüche,
**dadurch gekennzeichnet, dass** die Magnetanordnung (23) an dem ersten Bremselement (20) oder zweiten Bremselement (22) angeordnet ist.

10. Antriebsvorrichtung nach einem der vorhergehenden Ansprüche,
**dadurch gekennzeichnet, dass** die Magnetanordnung (23) an dem zweitem Bremselement (22), welches mit einem von erstem Gehäuseteil (3) und zweitem Gehäuseteil (4) drehfest verbunden ist, angeordnet ist.

## Claims

1. Drive device for a pivotable vehicle flap, comprising
a first housing part (3),
a second housing part (4), wherein the first housing part (3) and the second housing part (4) are designed to be movable relative to each other in the direction of the axial extension (x) of the drive device (1),
a spindle rod (12) rotatably arranged on one of the first housing part (3) and the second housing part (4), and
a spindle nut (13) non-rotatably arranged on the other of the first housing part (3) and the second housing part (4),
a brake device (19), comprising a first brake element (20),
a second brake element (22) non-rotatably connected to one of the first housing part (3) and the second housing part (4), wherein the first brake element (20) can interact with the second brake element (22) to generate a braking force, and
a magnet arrangement (23) for generating a magnetic field, **characterized in**
**that** the first brake element (20) is non-rotatably connected to the spindle rod (12), and
**that** the first brake element (20) can be displaced in the axial direction (x) of the spindle rod (12) by the magnetic field.

2. Drive device according to claim 1, **characterized in that** the first housing part (3) and the second housing part (4) are components of a housing (2) of the drive device (1), wherein the first housing part (3) and the second housing part (4) are arranged concentrically with respect to each other.

3. Drive device according to claim 1 or 2, **characterized in that** the magnet arrangement (23) comprises an electromagnet (24).

4. Drive device according to one of the preceding claims, **characterized in that** the magnet arrangement (23) comprises a permanent magnet (25).

5. Drive device according to claim 4, **characterized in that** the permanent magnet (25) magnetically attracts the first brake element (20) toward the second brake element (22).

6. Drive device according to one of the preceding claims, **characterized in that** the first brake element (20) can be displaced in the axial direction (x) so far toward the second brake element (22) that the first brake element (20) and the second brake element (22) can touch each other.

7. Drive device according to one of the preceding claims, **characterized in that** the first brake element (20) has a first friction surface (20a) and the second brake element (22) has a second friction surface (22a).

8. Drive device according to claim 7, **characterized in that** the first friction surface (20a) and the second friction surface (22a) face each other and are aligned perpendicularly to the axial direction (x) of the spindle rod (12).

9. Drive device according to any of the preceding claims, **characterized in that** the magnet arrangement (23) is arranged on the first brake element (20) or the second brake element (22).

10. Drive device according to any of the preceding claims, **characterized in that** the magnet arrangement (23) is arranged on the second brake element (22), which is non-rotatably connected to one of the first housing part (3) and the second housing part (4).

## Revendications

1. Dispositif d'entraînement d'un volet de véhicule pivotant, ledit dispositif comprenant
une première partie de boîtier (3),
une deuxième partie de boîtier (4), la première partie de boîtier (3) et la deuxième partie de boîtier (4) étant conçues de manière à être mobiles l'une par rapport à l'autre dans la direction de l'extension axiale (x) du dispositif d'entraînement (1),
une tige de broche (12) disposée de manière rotative sur l'une parmi la première partie de boîtier (3) et la deuxième partie de boîtier (4), et
un écrou de broche (13) disposé solidairement en rotation sur l'autre parmi la première partie de boîtier (3) et la deuxième partie de boîtier (4),
un dispositif de freinage (19) comprenant un premier élément de freinage (20),
un deuxième élément de freinage (22) relié solidairement en rotation à l'une parmi la première partie de boîtier (3) et la deuxième partie de boîtier (4), le premier élément de freinage (20) pouvant coopérer avec le deuxième élément de freinage (22) pour générer une force de freinage, et
un ensemble magnétique (23) destiné à générer un champ magnétique,
**caractérisé en ce**
**que** le premier élément de freinage (20) est relié solidairement en rotation à la tige de broche (12), et
**que** le premier élément de freinage (20) peut être déplacé par le champ magnétique le long de la direction axiale (x) de la tige de broche (12).

2. Dispositif d'entraînement selon la revendication 1, **caractérisé en ce que** la première partie de boîtier (3) et la deuxième partie de boîtier (4) font partie d'un boîtier (2) du dispositif d'entraînement (1), la première partie de boîtier (3) et la deuxième partie de boîtier (4) étant disposées concentriquement l'une à l'autre.

3. Dispositif d'entraînement selon la revendication 1 ou 2, **caractérisé en ce que** l'ensemble magnétique (23) comprend un électro-aimant (24).

4. Dispositif d'entraînement selon l'une des revendications précédentes,
**caractérisé en ce que** l'ensemble magnétique (23) comprend un aimant permanent (25).

5. Dispositif d'entraînement selon la revendication 4, **caractérisé en ce que** l'aimant permanent (25) attire magnétiquement le premier élément de freinage (20) en direction du deuxième élément de freinage (22).

6. Dispositif d'entraînement selon l'une des revendications précédentes,
**caractérisé en ce que** le premier élément de freinage (20) est déplaçable dans la direction axiale (x) en direction du deuxième élément de freinage (22) jusqu'à ce que le premier élément de freinage (20) et le deuxième élément de freinage (22) puissent se toucher.

7. Dispositif d'entraînement selon l'une des revendications précédentes,
**caractérisé en ce que** le premier élément de freinage (20) présente une première surface de friction (20a) et le deuxième élément de freinage (22) présente une deuxième surface de friction (22a).

8. Dispositif d'entraînement selon la revendication 7, **caractérisé en ce que** la première surface de friction (20a) et la deuxième surface de friction (22a) sont dirigées l'une vers l'autre et sont orientées perpendiculairement à la direction axiale (x) de la tige de broche (12).

9. Dispositif d'entraînement selon l'une des revendications précédentes, **caractérisé en ce que** l'ensemble magnétique (23) est disposé sur le premier élément de freinage (20) ou le deuxième élément de freinage (22).

10. Dispositif d'entraînement selon l'une des revendications précédentes,
**caractérisé en ce que** l'ensemble magnétique (23) est disposé sur le deuxième élément de freinage (22) qui est relié solidairement en rotation à l'une parmi la première partie de boîtier (3) et la deuxième partie de boîtier (4).
